# FASCICULE DE BREVET EUROPEEN

(11) **EP 2 165 156 B1**
(45) Date de publication et mention de la délivrance du brevet: **05.01.2011**
(21) Numéro de dépôt: 08774629.3
(22) Date de dépôt: 02.07.2008
(51) Int. Cl.: G01C 23/00, G09G 5/00

(54) **SYSTÈME D'AFFICHAGE D'APPLICATIONS AVIONIQUES ET NON-AVIONIQUES**
ANZEIGESYSTEM FÜR FLUGTECHNISCHE UND NICHTFLUGTECHNISCHE ANWENDUNGEN
DISPLAY SYSTEM FOR AVIONICS AND NON-AVIONICS APPLICATIONS

(30) Priorité: 05.07.2007 FR 0756283
(43) Date de publication de la demande: 24.03.2010
(73) Titulaire: AIRBUS OPERATIONS, 31060 Toulouse (FR)
(72) Inventeur: CHEYMOL, Lionel, F-31000 Toulouse (FR); FOUCART, Vincent, F-31300 Toulouse (FR); INNOCENT, Simon, F-31300 Toulouse (FR)
(74) Mandataire: Ilgart, Jean-Christophe
(86) Numéro de dépôt international: PCT/EP2008/058493
(87) Numéro de publication internationale: WO 2009/004023

(56) Documents cités:
- US-A- 6 038 498
- US-A1- 2003 038 844
- US-A1- 2006 184 253

## Description

### DOMAINE TECHNIQUE

La présente invention concerne de manière générale les systèmes d'affichage pour planche de bord tout écran (*Glass Cockpit*) dans un cockpit d'avion, encore dénommés CDS (*Cockpit Display System*).

### ÉTAT DE LA TECHNIQUE ANTÉRIEURE

Certains cockpits d'avion sont désormais équipés d'une planche de bord tout écran, dans laquelle les instruments à aiguille traditionnels ont laissé place à des écrans, notamment des écrans LCD. Ces écrans permettent d'afficher des informations indispensables à la conduite du vol, comme celles relatives au pilotage, à la navigation, aux communications. Ces informations sont générées et fournies par des systèmes embarqués, dits avioniques, obéissant à certaines contraintes d'intégrité et de disponibilité.

En sus des informations avioniques, les pilotes peuvent consulter en ligne un certain nombre d'informations dites « non-avioniques », autrefois disponibles sur support papier, telles que cartes de navigation, abaques de calcul, manuels etc. Ces informations ne sont pas essentielles pour la conduite du vol et ne sont pas soumises aux contraintes précitées. Elles sont généralement fournies par des applications non spécifiquement développées pour les besoins avioniques, par exemple des applications de type « grand public » développées sur Windows^{™} qui nécessitent souvent des ressources hardware que les systèmes avioniques ne peuvent fournir ou ne fourniraient qu'à grand frais.

Pour concilier les exigences distinctes des applications avioniques et non-avioniques, il est connu de partitionner l'aéronef en une zone avionique, aussi dénommée « zone sécurisée », et une zone non-avionique, aussi dénommée « monde ouvert ». Chacune de ces deux zones comprend des équipements informatiques, tels que terminaux, serveurs etc. reliés à un réseau embarqué. Ce réseau présente la particularité d'être partitionné en deux sous-réseaux correspondant respectivement à la zone sécurisée et à la zone non sécurisée. Les liaisons au sein d'une même zone peuvent être de type bidirectionnel alors que les liaisons inter-zone sont nécessairement de type unidirectionnel, dirigées de la zone sécurisée vers la zone non sécurisée.

Il est essentiel de maintenir une ségrégation stricte entre zones sécurisée et non-sécurisée, ce pour deux raisons. Tout d'abord, il faut prévenir toute intrusion accidentelle ou malveillante dans la zone sécurisée, notamment tout piratage informatique qui pourrait être issu du monde ouvert. Ensuite, il importe que les applications hébergées dans le monde ouvert ne perturbent pas celles hébergées dans la zone avionique, c'est-à-dire mettent en cause le comportement déterministe de ces dernières.

Un système d'affichage selon le préambule de la revendication 1 est connu du document US 2003/03884A1.

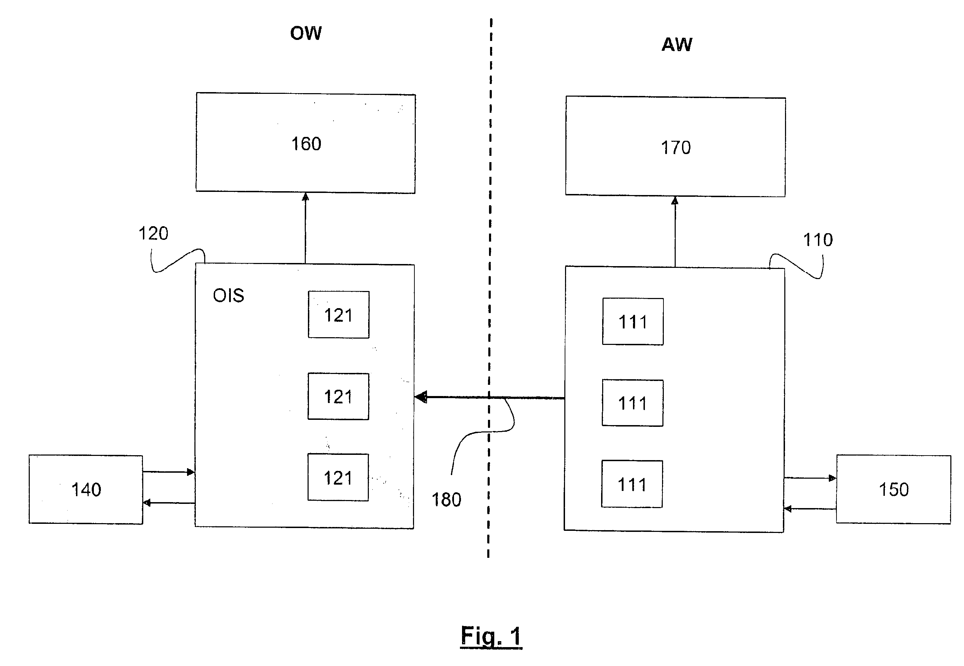

La Fig. 1 représente une architecture connue de système d'information embarqué assurant la ségrégation entre zone avionique (AW) et monde ouvert (OW).

Le système d'information 100 est scindé en deux systèmes, un système avionique 110 et un système non avionique dit OIS (*On-board Information System*), 120, disposant chacun de ses propres plateformes d'exécution 111 et 121, ses propres moyens d'affichage 170 et 160 et de ses propres périphériques de contrôle 130 et 140. Les plateformes d'exécution 111 et 121 sont constituées de moyens matériels (processeurs, serveurs etc.) permettant l'exécution des applications avioniques et non-avioniques. Par périphérique de contrôle, on entend des moyens tels que clavier, souris, joystick, dédiés ou non, permettant à l'opérateur d'interagir avec le système d'information auquel il est relié.

Les plateformes d'exécution sont connectées au réseau embarqué, les liaisons entre plateformes de la zone AW et de la zone OW étant nécessairement de type unidirectionnel comme symbolisé en 180.

L'architecture représentée en Fig. 1 n'est cependant pas entièrement satisfaisante. Elle requiert en effet deux types d'écrans distincts sur la planche de bord du cockpit, ce qui se traduit par des développements distincts, une gestion de pièces détachées et une maintenance relativement complexes. En outre, cette architecture manque de flexibilité. En effet la partition entre écrans de la zone avionique et écrans du monde ouvert étant fixée, le pilote ne peut changer de configuration d'affichage, par exemple afficher une information d'un type donné sur l'écran de son choix, ou encore modifier le nombre ou la répartition des écrans de chaque type au sein du cockpit. Par exemple, le pilote peut souhaiter afficher les informations avioniques sur les écrans centraux, facilitant ainsi le travail collaboratif avec le copilote, ou encore regrouper sur un même écran voire des écrans contigus des informations avioniques qu'il souhaite pouvoir comparer aisément.

La flexibilité de configuration d'affichage permet également, si besoin est, de bénéficier d'une surface d'affichage plus importante pour les informations avioniques ou a *contrario* de bénéficier d'écrans de meilleure qualité d'affichage (par exemple d'une plus grande dynamique de réglage de luminosité) pour les informations non avioniques.

Enfin, la duplication des périphériques d'entrée pour les applications avioniques et non avioniques est source de poids embarqué supplémentaire ainsi que de surcoûts de gestion et de maintenance.

Un premier but de la présente invention est donc de permettre une grande flexibilité de la configuration d'affichage et une mutualisation des écrans du cockpit, sans remettre en cause la garantie de ségrégation entre la zone avionique et le monde ouvert.

Un second but de la présente invention est de mutualiser les périphériques de contrôle permettant à un opérateur d'interagir avec les applications avioniques et non-avioniques.

### EXPOSÉ DE L'INVENTION

La présente invention est définie par un système d'affichage pour planche de bord tout écran d'un aéronef, destiné à fournir des flux vidéo à une pluralité d'écrans de visualisation de ladite planche de bord, ledit aéronef étant partitionné en une zone sécurisée, dite avionique, et une zone non sécurisée, dite monde ouvert, ledit système comprenant au moins un premier port destiné à recevoir des premières données à afficher d'un système, appartenant à la zone avionique, dit système avionique, et au moins un second port destiné à recevoir des secondes données à afficher d'un système appartenant au monde ouvert, dit système non avionique. Le système d'affichage comprend :
- des ressources matérielles prédéterminées allouées au traitement des secondes données ;
- un processeur, appartenant à la zone avionique, adapté à surveiller les ressources matérielles utilisées par ledit traitement et à interrompre ce dernier si lesdites ressources matérielles utilisées excèdent lesdites ressources allouées.

Les ressources matérielles sont par exemple des zones mémoire ou des tailles mémoire, des temps d'exécution, des fréquences de trames ou des durées de trames, ou encore des zones d'affichage sur au moins un desdits écrans de visualisation.

Avantageusement, le système d'affichage peut comprendre un buffer vidéo destiné à stocker au moins un flux vidéo issu du système non-avionique, ledit buffer étant contrôlé par ledit processeur.

Il peut également comprendre une carte graphique adaptée à recevoir des commandes graphiques du processeur pour générer au moins un flux vidéo relatif à la symbologie, lesdites commandes graphiques étant générées par le processeur à partir des données à afficher du système avionique.

Il peut enfin comprendre un mixeur vidéo adapté à combiner au moins ledit flux vidéo relatif à la symbologie et le flux vidéo issu du système non avionique pour générer au moins un flux vidéo à destination d'un desdits écrans de visualisation.

L'invention concerne également un système d'information embarqué à bord d'un aéronef, partitionné en une zone sécurisée, dite avionique, et une zone non sécurisée, dite monde ouvert, ledit système d'information comprenant un système d'affichage comme défini ci-dessus, un système avionique dans la zone avionique et un système non-avionique dans le monde ouvert. Le système d'information embarqué comprend en outre un périphérique de contrôle connecté au système avionique au moyen d'un bus bidirectionnel et au système non-avionique à l'aide d'un bus unidirectionnel, dirigé du périphérique de contrôle vers le système non-avionique.

Avantageusement, le système d'information embarqué comprend en outre un concentrateur vidéo adapté à recevoir un flux vidéo d'un second système avionique ainsi qu'un flux vidéo du système non-avionique pour générer au moins un flux vidéo à destination dudit buffer vidéo.

Selon une variante, le flux vidéo du système non-avionique est transmis à une passerelle de conversion via une liaison Ethernet, ladite passerelle étant reliée au dit système d'affichage par une liaison Arinc 429 et étant adaptée à convertir des trames Ethernet en des mots au format Arinc 429.

### BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :
La Fig. 1 illustre schématiquement un exemple d'architecture connue de système d'information embarqué assurant la ségrégation entre zone avionique (AW) et monde ouvert (OW) ;
La Fig. 2 illustre schématiquement une architecture de système d'information embarqué utilisant un système d'affichage pour planche de bord tout écran, selon le principe général de l'invention ;
La Fig. 3 illustre schématiquement une architecture de système d'information embarqué utilisant un système d'affichage pour planche de bord tout écran, selon un premier mode de réalisation de l'invention ;
La Fig. 4 illustre schématiquement une architecture de système d'information embarqué utilisant un système d'affichage pour planche de bord tout écran, selon un second mode de réalisation de l'invention.

### EXPOSÉ DÉTAILLÉ DE MODES DE RÉALISATION PARTICULIERS

L'idée à la base de l'invention est d'allouer des ressources matérielles déterminées au traitement des données à afficher issues des systèmes appartenant au monde ouvert et de contrôler l'utilisation de ces ressources par un processeur appartenant à la zone avionique.

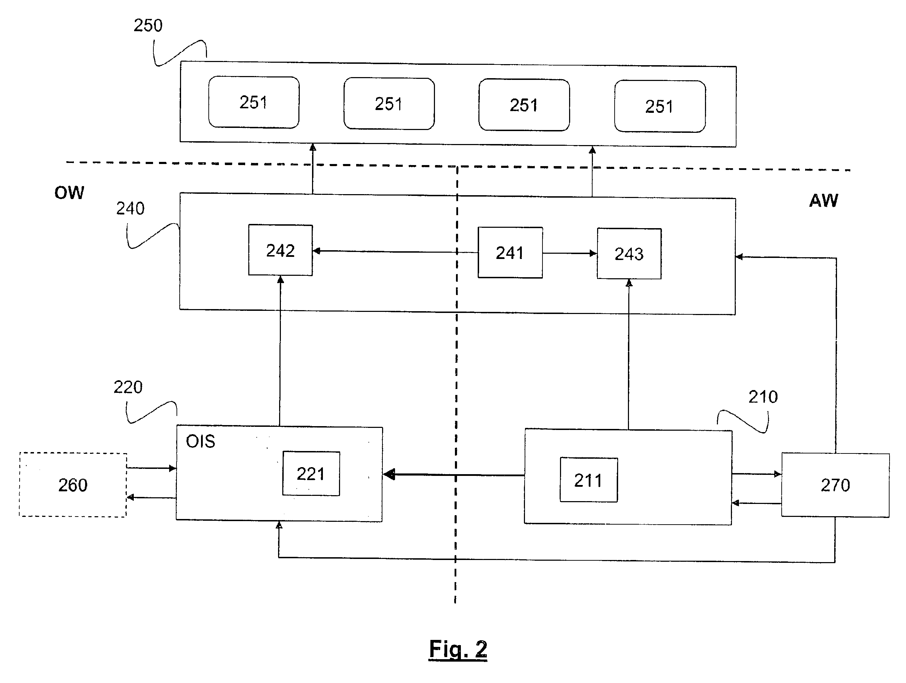

Plus précisément, la Fig. 2 illustre l'architecture du système d'information embarqué selon le principe général de l'invention. On distingue à nouveau la zone avionique (AW) et la zone non sécurisée (OW). Le système d'information embarqué est scindé en un système avionique, 210, et un système OIS, 220, comprenant respectivement des plateformes d'exécution 211 et 221 connectées à un réseau embarqué. Les liaisons entre le système avionique et le système OIS sont unidirectionnelles et dirigées de la zone avionique vers le monde ouvert. A la différence de l'état de la technique, les écrans de visualisation 251 de la planche de bord 250 sont mutualisés entre la zone avionique et le monde ouvert. La gestion des écrans mutualisés est effectuée par un système d'affichage commun (CDS) 240 comprenant des moyens de traitement 243, 242 utilisant des ressources matérielles respectivement allouées au traitement des données avioniques et des données non-avioniques. Le système d'affichage 240 comprend en outre un processeur 241 chargé, entre autres, de surveiller les ressources matérielles utilisées pour traitement des données non-avioniques. Si les ressources matérielles utilisées excèdent celles qui lui sont allouées le processeur interrompt ce traitement.

On garantit ainsi qu'à aucun moment le traitement des données non-avioniques n'utilise plus de ressources que celles prévues, et n'affecte par là le traitement des données avioniques. L'intégrité et la disponibilité des ressources de la zone avionique sont préservées.

Après traitement par les moyens 242, 243, les données avioniques et non-avioniques sont démultiplexées puis transmises sous forme de flux vidéo aux écrans de visualisation 251. La configuration de démultiplexage est définie par l'opérateur grâce au périphérique de contrôle 270.

Par ailleurs, le périphérique de contrôle 270 permet à l'opérateur de configurer et contrôler les plateformes d'exécution 211 et 221. Il est connecté au système OIS 220 au moyen d'un bus unidirectionnel et peut être connecté au système avionique 210 au moyen d'un bus bidirectionnel. Un second périphérique de contrôle optionnel 260 peut être connecté au système OIS au moyen d'un bus bidirectionnel.

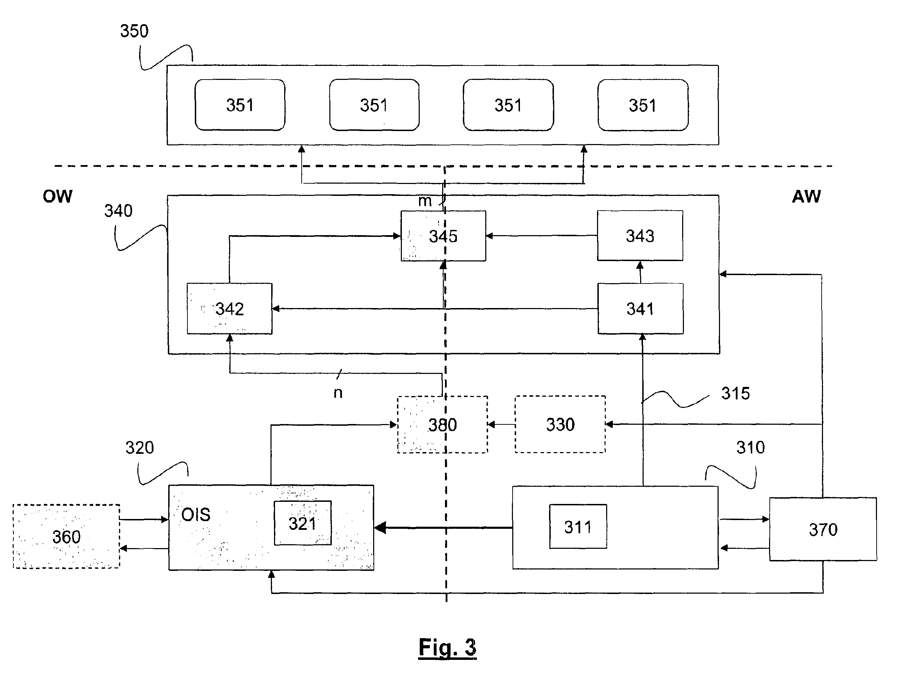

La Fig. 3 illustre schématiquement une architecture de système d'information embarqué utilisant un système d'affichage selon un premier mode de réalisation de l'invention.

Les éléments référencés 310, 311, 320, 321, 350, 351, 360, 370 sont respectivement identiques à ceux référencés 210, 211, 220, 221, 250, 251, 260, 270 de la Fig. 2 et ne seront donc pas décrits à nouveau.

Le système d'affichage comprend un processeur 341, un buffer vidéo 342, une carte graphique 343 et un mixeur vidéo 345. Le buffer vidéo 342 stocke temporairement au moins un flux vidéo, et généralement une pluralité n de flux vidéo issus du système OIS ou du concentrateur vidéo 380, décrit plus loin.

Le processeur 341 reçoit du système avionique 310 via le bus 315, par exemple un bus Arinc 429 ou une liaison de réseau AFDX (*Avionics Full DupleX*), des données à afficher (paramètres avioniques) et génère, à l'aide d'une librairie graphique, les commandes d'animation de la symbologie correspondante. Ces commandes sont exécutées par la carte graphique 343. Les flux vidéo relatifs à la symbologie sont ensuite mixés avec les flux vidéo issus du système OIS, stockés dans le buffer vidéo 342, pour générer m flux vidéo mixés, à destination des m écrans de visualisation dénommés aussi VDUs (*Visual Display Units*) 351. Les flux mixés seront de préférence au format DVI (*Digital Visual Interface*). Le mixage est réalisé par une combinaison de flux vidéo de type « *alpha compositing* », le choix des coefficients alpha pour différentes zones, permettant de déterminer dans chacune de ces zones l'image en premier plan ou de manière plus générale le degré de superposition des images représentées par chacun de ces flux.

De manière optionnelle, un second système avionique 330, peut directement générer un flux vidéo représentant la symbologie, sans pré-traitement par le processeur 341. Dans ce cas, les flux vidéo issus respectivement du second système avionique 330 et du système OIS sont traités par le concentrateur vidéo pour générer une pluralité n de flux, par exemple au format Arinc 818 à destination du système d'affichage 340.

Outre ses fonctions de commandes graphiques, le processeur surveille l'utilisation des ressources matérielles allouées pour le traitement des données non avioniques. Ces ressources peuvent être de manière générale, des zones ou des tailles mémoire, des intervalles temporels ou des durées d'exécution, des fréquences de trames, des gammes de résolution, des ensembles discrets ou des plages continues de paramètres. Ainsi, le processeur peut vérifier que les paramètres utilisés pour les signaux vidéo sont bien ceux autorisés, que les zones mémoires sont bien respectées, que les intervalles de retour trame ne sont pas utilisés pour la transmission de données auxiliaires, que les coefficients utilisés dans le mixage vidéo sont licites, c'est-à-dire correspondent bien à la composition d'images programmée par l'opérateur pour les différents écrans.

Si le processeur détecte une violation de ces contraintes dans l'utilisation des ressources matérielles, autrement dit si les ressources effectivement utilisées pour le traitement des données non-avioniques excèdent celles qui lui sont allouées, le processeur interrompt le traitement. Par exemple, le processeur peut condamner la lecture du buffer vidéo 342, l'écriture dans une zone mémoire, forcer un coefficient de composition d'image à zéro.

On comprendra qu'ainsi l'intégrité et la disponibilité des ressources pour le traitement des données avioniques sont assurées.

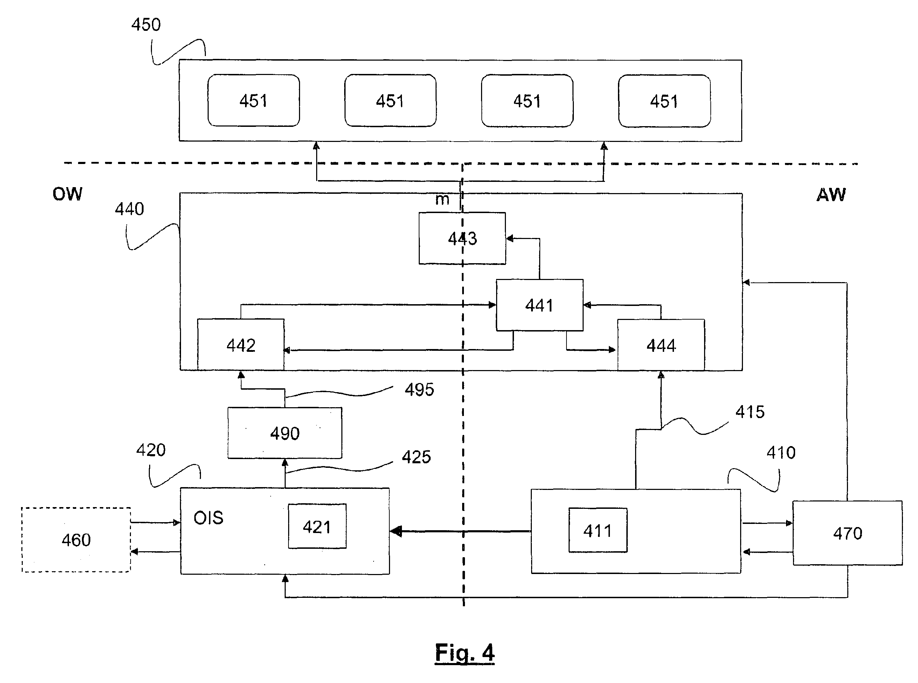

La Fig. 4 illustre schématiquement une architecture de système d'information embarqué utilisant un système d'affichage selon un second mode de réalisation de l'invention.

Les éléments référencés 410, 411, 420, 421, 450, 451, 460, 470 sont respectivement identiques à ceux référencés 210, 211, 220, 221, 250, 251, 260, 270 de la Fig. 2 et ne seront donc pas à nouveau décrits.

A la différence du premier mode de réalisation, la ségrégation entre données avioniques et non-avioniques est assurée en amont de la génération des flux vidéo. Plus précisément, le système avionique 410 transmet les données avioniques à afficher, sous forme de messages, à un premier port d'entrée 444 et le système OIS transmet les données non-avioniques à afficher, sous forme de messages, à un second port d'entrée 442 du système d'affichage 440. De préférence, les données avioniques sont transmises via une liaison 415 de réseau AFDX, avec les garanties conventionnelles de déterminisme associées à ce réseau. Les données du système OIS pourront être transmises via une liaison Ethernet classique 425 à une passerelle de conversion 490. La passerelle de conversion est reliée au second port d'entrée du système d'affichage grâce à une liaison 495 de type Arinc 429. La passerelle de conversion est adaptée à convertir des trames Ethernet en des mots Arinc 429. Avantageusement, les messages transmis par le système avionique 410 et la passerelle de conversion 490 sont conformes au protocole Arinc 661.

Le processeur 441 contrôle les ports d'entrée 442 et 444, et génère, à l'aide d'une librairie graphique, d'une part les commandes graphiques associées à la symbologie avionique et d'autre part les commandes graphiques associées aux données non avioniques. Ces commandes sont transmises à la carte graphique 443 pour générer les flux vidéo, de préférence au format DVI, à destination des m écrans de visualisation 451. Le démultiplexage des m différents flux vidéo vers les m écrans est configuré par l'opérateur au moyen du périphérique 470. Ce dernier est également relié au système avionique par un bus bidirectionnel et au système OIS par un bus unidirectionnel, comme pour le premier mode de réalisation.

Le processeur 441 surveille les ressources matérielles utilisées pour le traitement des données non-avioniques, par exemple la conformité des messages au protocole Arinc 661, notamment la fréquence et la longueur des trames, la validité des entêtes, ou encore les zones de mémoire. Avantageusement, la mémoire est partitionnée en blocs indépendants utilisés soit pour les données avioniques soit pour les données non-avioniques. Si une application non-avionique franchit les bornes du bloc ou des blocs qui lui sont réservé(s), ou de manière plus générale si elle franchit les limites des ressources qui lui sont allouées, le processeur interdit l'accès au port 442.

## Revendications

1. Système d'affichage pour planche de bord tout écran d'un aéronef, destiné à fournir des flux vidéo à une pluralité d'écrans de visualisation de ladite planche de bord, ledit aéronef étant partitionné en une zone sécurisée, dite avionique (AW), et une zone non sécurisée (OW), dite monde ouvert, ledit système comprenant au moins un premier port destiné à recevoir des premières données à afficher d'un système (210, 310, 410), appartenant à la zone avionique, dit système avionique, et au moins un second port destiné à recevoir des secondes données à afficher d'un système (220, 320, 420) appartenant au monde ouvert, dit système non avionique, **caractérisé en ce qu'**il comprend :
- des ressources matérielles prédéterminées allouées au traitement des secondes données ;
- un processeur (241, 341, 441), appartenant à la zone avionique, adapté à surveiller les ressources matérielles utilisées par ledit traitement et à interrompre ce dernier si lesdites ressources matérielles utilisées excèdent lesdites ressources allouées.

2. Système d'affichage selon la revendication 1, **caractérisé en ce que** les ressources matérielles sont des zones mémoire ou des tailles mémoire.

3. Système d'affichage selon la revendication 1, **caractérisé en ce que** les ressources matérielles sont des temps d'exécution, des fréquences de trames ou des durées de trames.

4. Système d'affichage selon la revendication 1, **caractérisé en ce que** les ressources matérielles sont des zones d'affichage sur au moins un desdits écrans de visualisation.

5. Système d'affichage selon l'une des revendications précédentes, **caractérisé en ce qu'**il comprend un buffer vidéo (342) destiné à stocker au moins un flux vidéo issu du système non-avionique, ledit buffer étant contrôlé par ledit processeur.

6. Système d'affichage selon l'une des revendications précédentes, **caractérisé en ce qu'**il comprend une carte graphique (343, 443) adaptée à recevoir des commandes graphiques du processeur pour générer au moins un flux vidéo relatif à la symbologie, lesdites commandes graphiques étant générées par le processeur à partir des données à afficher du système avionique.

7. Système d'affichage selon les revendications 5 et 6, **caractérisé en ce qu'**il comprend un mixeur vidéo adapté à combiner au moins ledit flux vidéo relatif à la symbologie et le flux vidéo issu du système non avionique pour générer au moins un flux vidéo à destination d'un desdits écrans de visualisation.

8. Système d'information embarqué à bord d'un aéronef partitionné en une zone sécurisée, dite avionique (AW), et une zone non sécurisée (OW), dite monde ouvert, ledit système d'information comprenant un système d'affichage selon l'une des revendications précédentes, un système avionique (210, 310, 410) dans la zone avionique et un système non-avionique (220, 320, 420) dans le monde ouvert, **caractérisé en ce qu'**il comprend en outre un périphérique de contrôle (270, 370, 470) connecté au système avionique au moyen d'un bus bidirectionnel et au système non-avionique à l'aide d'un bus unidirectionnel, dirigé du périphérique de contrôle vers le système non-avionique.

9. Système d'information embarqué selon la revendication 8 en dépendance de la revendication 5, **caractérisé en ce qu'**il comprend en outre un concentrateur vidéo (380) adapté à recevoir un flux vidéo d'un second système avionique (330) ainsi qu'un flux vidéo du système non-avionique pour générer au moins un flux vidéo à destination dudit buffer vidéo.

10. Système d'information embarqué selon la revendication 8, **caractérisé en ce que** le flux vidéo du système non-avionique est transmis à une passerelle de conversion (490) via une liaison Ethernet (425), ladite passerelle étant reliée au dit système d'affichage par une liaison Arinc 429 (495) et étant adaptée à convertir des trames Ethernet en des mots au format Arinc 429.

## Claims

1. A display system for a glass cockpit of an aircraft, intended for providing video screens to a plurality of viewing screens of said instrument panel, said aircraft being partitioned into a secured area, referred to as avionic world (AW), and a non-secured area, referred to as open world (OW), said system comprising at least one first port intended to receive the first data to be displayed of a system (210, 310, 410), belonging to the avionic area, referred to as avionic system, and at least one second port intended to receive second data to be displayed from a system (220, 320, 420) belonging to the open world, referred to as non-avionic system, **characterized in that** it comprises:
- predetermined hardware resources allocated to the processing of the second data;
- a processor (241, 341, 441), belonging to the avionic area, adapted for monitoring the hardware resources used by said processing and interrupting this processing if said hardware resources used exceed said allocated resources.

2. The display system according to claim 1, **characterized in that** the hardware resources are memory areas or memory sizes.

3. The display system according to claim 1, **characterized in that** the hardware resources are execution times, frame frequencies or frame durations.

4. The display system according to claim 1, **characterized in that** the hardware resources are display areas on at least one of said viewing screens.

5. The display system according to claim 1, **characterized in that** it comprises a video buffer (342) intended to store at least one video stream originating from the non-avionic system, said buffer being controlled by said processor.

6. The display system according to claim 1, **characterized in that** it comprises a graphic card (343, 443) adapted to receiving graphic commands from the processor in order to generate at least one video stream relating to symbology, said graphic commands being generated by the processor from the data to be displayed of the avionic system.

7. The display system according to any of claims 5 and 6, **characterized in that** it comprises a video mixer adapted to combining at least said video stream relating to the symbology and the video stream originating from the non-avionic system in order to generate at least one video stream sent to one of said viewing screens.

8. An information system on board of an aircraft, partitioned into a secured area, referred to as avionic world (AW), and a non-secured area, referred to as open world (OW), said information system comprising a display system according to any of the preceding claims, an avionic system (210, 310, 410) in the avionic area and a non-avionic system (220, 320, 420) in the open world, **characterized in that** it further comprises a control peripheral (270, 370, 470) connected to the avionic system by means of a bidirectional bus and to the non-avionic system by a unidirectional bus, directed from the control peripheral towards the non-avionic system.

9. The on-board information system according to claim 8, depending on claim 5, **characterized in that** it further comprises a video concentrator (380) adapted to receiving a video stream from a second avionic system (330) as well as a video stream from the non-avionic system in order to generate at least one video stream sent to said video buffer.

10. The on-board information system according to claim 8, **characterized in that** the video stream of the non-avionic system is transmitted to a conversion gateway (490) via an Ethernet link (425), said gateway being connected to said display system through an Arinc 429 link (495) and being adapted for converting Ethernet frames into words with Arinc 429 format.

## Patentansprüche

1. Anzeigesystem für Glass-Cockpit-Instrumententafel eines Flugzeugs, dazu bestimmt, einer Vielzahl von Displays der genannten Instrumententafel Videosignalflüsse zu liefern, wobei das genannte Flugzeug unterteilt ist in einen geschützten Bereich, avionischer Bereich (AW) genannt, und einen ungeschützten Bereich (OW), nicht-avionischer bzw. offener Bereich genannt, wobei das genannte System umfasst: wenigstens ein erstes Port, bestimmt für den Empfang von ersten anzuzeigenden Daten eines zum avionischen Bereich gehörenden Systems (210, 310, 410), avionisches System genannt, und wenigstens ein zweites Port, bestimmt für den Empfang von zweiten anzuzeigenden Daten eines zum offenen Bereich gehörenden Systems (220, 320, 420), nicht-avionisches System genannt,
**dadurch gekennzeichnet, dass** es umfasst:
- der Verarbeitung der zweiten Daten zugeteilte vorherbestimmte materielle Mittel;
- einen Prozessor (241, 341, 441), der zu dem avionischen Bereich gehört und angepasst ist, die durch die genannte Verarbeitung benutzten materiellen Mittel zu überwachen und diese letztere zu unterbrechen, wenn die genannten benutzten materiellen Mittel die genannten zugeteilten Mittel übersteigen.

2. Anzeigesystem nach Anspruch 1, **dadurch gekennzeichnet, dass** die materiellen Mittel Speicherbereiche oder Speichergrößen sind.

3. Anzeigesystem nach Anspruch 1, **dadurch gekennzeichnet, dass** die materiellen Mittel Ausführungszeiten, Datenblockfrequenzen oder Datenblockzeiten sind.

4. Anzeigesystem nach Anspruch 1, **dadurch gekennzeichnet, dass** die materiellen Mittel Anzeigebereiche auf wenigstens einem der genannten Displays sind.

5. Anzeigesystem nach einem der vorhergehenden Ansprüche, **dadurch gekennzeichnet, dass** es einen Video-Puffer (342) umfasst, bestimmt zu Speicherung wenigstens eines von dem nicht-avionischen System stammenden Videosignalflusses, wobei der genannte Puffer durch den genannten Prozessor kontrolliert wird.

6. Anzeigesystem nach einem der vorhergehenden Ansprüche, **dadurch gekennzeichnet, dass** es eine Grafikkarte (343, 443) umfasst, angepasst an den Empfang der grafischen Befehle des Prozessors, um wenigstens einen die Symbologie betreffenden Videosignalfluss zu erzeugen, wobei die genannten grafischen Befehle durch den Prozessor aus den anzuzeigenden Daten des avionischen Systems erzeugt werden.

7. Anzeigesystem nach den Ansprüchen 5 und 6, **dadurch gekennzeichnet, dass** es einen Videomixer umfasst, angepasst um wenigstens den genannten die Symbologie betreffenden Videosignalfluß und den von dem nicht-avionischen System stammenden Videosignalfluß zu mischen, um wenigstens einen für eines der genannten Displays bestimmten Videosignalfluß zu erzeugen.

8. Bord-Informationssystem eines Flugzeugs, unterteilt in einen geschützten Bereich, avionischer Bereich (AW) genannt, und einen ungeschützten Bereich (OW), offener Bereich genannt, wobei das genannte Informationssystem ein Anzeigesystem nach einem der vorhergehenden Ansprüche, ein avionisches System (210, 310, 410) in dem avionischen Bereich und ein nicht-avionisches System (220, 320, 420) in dem offenen Bereich umfasst, **dadurch gekennzeichnet, dass** es außerdem eine Kontroll-Peripherie (270, 370, 470) umfasst, verbunden mit dem avionischen System durch einen bidirektionalen Bus und mit dem nicht-avionischen Bereich durch einen unidirektionalen Bus, von der Kontrollperipherie in Richtung nicht-avionisches System.

9. Bord-Informationssystem nach Anspruch 8 in Abhängigkeit von dem Anspruch 5, **dadurch gekennzeichnet, dass** es außerdem einen Video-Konzentrator (380) umfasst, angepasst um einen Videosignalfluss von einem zweiten avionischen System (330) sowie einen Videosignalfluss von dem nicht-avionischen System zu empfangen, um wenigstens einen für den genannten Video-Puffer bestimmten Videosignalfluss zu erzeugen.

10. Bord-Informationssystem nach Anspruch 8 in Abhängigkeit von dem Anspruch 5, **dadurch gekennzeichnet, dass** der Videosignalfluss des nicht-avionischen Systems über eine Ethernet-Verbindung zu einem Konversions-Gateway (490) übertragen wird, wobei das genannte Gateway mit dem genannten Anzeigesystem durch eine Arinc-429-Verbindung (495) verbunden ist und angepasst ist, um Ethernet-Blöcke in Wörter mit dem Format Arinc 429 zu konvertieren.
